# FASCICULE DE BREVET EUROPEEN

(11) **EP 2 602 609 B1**
(45) Date de publication et mention de la délivrance du brevet: **24.06.2015**
(21) Numéro de dépôt: 12195303.8
(22) Date de dépôt: 03.12.2012
(51) Int. Cl.: G01N 17/02, C23F 13/04

(54) **Surveillance d'une canalisation enterree soumise a protection cathodique**
Überwachung einer Rohrleitung unter kathodischem Korrosionsschutz
Monitoring of a pipeline under cathodic protection

(30) Priorité: 05.12.2011 FR 1161133
(43) Date de publication de la demande: 12.06.2013
(73) Titulaire: GDF SUEZ, 92400 Courbevoie (FR)
(72) Inventeur: Meyer, Michel, 75018 Paris (FR); Caron, Didier, 60700 Pontpoint (FR); Fleury, Elisabeth, 94700 Maisons-Alfort (FR); Poenou, Jérôme, 94350 Villiers sur Marne (FR); Fontaine, Sylvain, 60280 Margny-lès-Compiègne (FR); Rose, Daniel, 77157 Everly (FR); Tribollet, Bernard, 92240 Malakoff (FR)
(74) Mandataire: Thévenet, Jean-Bruno

(56) Documents cités:
- EP-A1- 0 882 975
- EP-A1- 1 571 438
- EP-A2- 1 598 446
- GB-A- 2 025 056
- "Potentiostat/Galvanostat VSP", , 1 novembre 2007 (2007-11-01), XP55053494, Claix, France Extrait de l'Internet: URL:http://www.bio-logic.info/potentiostat /brochures/20071123 - MRes - VSP.pdf [extrait le 2013-02-14]

## Description

### Arrière-plan de l'invention

L'invention se rapporte au domaine général de la protection cathodique des canalisations métalliques enterrées revêtues par un revêtement présentant une grande résistance d'isolement. L'invention concerne en particulier la surveillance du risque de corrosion d'une telle canalisation en présence d'interférences électriques alternatives ou mixtes (alternatives et continues).

Une canalisation métallique enterrée est protégée de la corrosion par une double protection constituée d'un revêtement extérieur et d'une protection active par injection de courant, la protection cathodique, de manière à polariser la canalisation de sorte à amener les surfaces de métal au droit des défauts de revêtement dans le domaine d'immunité de l'acier vis-à-vis de la corrosion. Cependant, en cas de défaut localisé d'un revêtement à haute résistance d'isolement, la corrosivité intrinsèque du sol, conjuguée aux effets des interférences électriques auxquelles la canalisation peut être soumise, peut conduire au développement, au droit des défauts de revêtements, d'une corrosion dont la cinétique de progression est plus ou moins rapide selon l'environnement électrique et géologique. Les interférences électriques éventuelles peuvent être liées d'une part aux courants alternatifs induits résultant de la proximité de la canalisation avec par exemple une ligne de transport d'électricité à haute tension ou un système de traction électrique (locomotive,...), et d'autre part à la circulation de courants vagabonds, alternatifs ou continus, dans le sol.

Plusieurs méthodes ont été développées pour surveiller une canalisation enterrée soumise à la protection cathodique, afin d'évaluer son risque de corrosion en présence d'interférences électriques alternatives.

Par exemple, le document EP 882 975 décrit un système de surveillance dans lequel différents coupons en acier nu sont enterrés à côté de la canalisation à la profondeur de la canalisation, chacun en différents lieux propices (lieux de plus forte exposition aux influences électriques sur le tracé de la canalisation). Les coupons sont électriquement reliés à la canalisation, puis périodiquement déconnectés de celle-ci, au moyen d'un dispositif de coupure et ré-enclenchement synchronisé avec une unité de mesure. L'unité de mesure peut mesurer et enregistrer des tensions et courants électriques, à grande vitesse d'échantillonnage (typiquement 10 kHz), en particulier la densité de courant continu circulant dans le circuit de liaison coupon/canalisation ainsi que diverses valeurs de tensions entre le coupon et une électrode de référence enterrée. Plusieurs types de méthode permettent d'évaluer et de maîtriser le risque de corrosion de la canalisation à partir des valeurs mesurées et enregistrées.

Un première type de méthode, reposant sur l'application d'une forte polarisation cathodique, consiste à s'assurer que la valeur moyenne du potentiel entre le coupon et le sol, par rapport à l'électrode de référence, mesurée dans un délai bref après l'ouverture du circuit de liaison canalisation/coupon, noté E_{OFF}, respecte bien en permanence un critère dit « thermodynamique » de potentiel E_{OFF}, c'est-à-dire que la valeur de E_{OFF} est bien en permanence plus électronégative que la valeur du potentiel dit « de protection », permettant ainsi d'assurer que l'attaque résiduelle de corrosion externe est négligeable, par élimination de toute composante de polarisation anodique de l'acier, au cours des cycles de variation de la tension instantanée (alternative) subie par la canalisation.

Outre la difficulté qu'il y a à réaliser la mesure effective du potentiel E_{OFF} en présence de la tension alternative résultant de l'influence électrique sur la canalisation, ce premier type de méthode soulève deux autres difficultés :
- D'une part, la présence de la tension alternative, sur la canalisation, crée un effet dit de « redressement faradique » qui, en modifiant les cinétiques des réactions électrochimiques inter-faciales, peut dans certains cas rendre inopérantes les valeurs de potentiel de protection traditionnellement utilisées.
- D'autre part, en cherchant à assurer la protection contre la corrosion de la canalisation par l'application d'une polarisation cathodique aussi importante que nécessaire, de façon à empêcher toute occurrence de passage dans le domaine anodique des réactions électrochimiques inter-faciales, cette méthode peut conduire, dans de nombreuses situations, à une polarisation cathodique très importante de la canalisation. Outre que cette situation peut entraîner des effets secondaires indésirables tels que : augmentation du risque de dégradation des propriétés anticorrosion du revêtement par décollement cathodique du revêtement, risque de fragilisation par l'hydrogène de l'acier dans des zones de défauts de revêtement concomitants avec des atteintes au métal créées par des agressions mécaniques externes, il arrive que, dans nombre de situations, en présence notamment d'effets d'induction par des courants alternatifs de forte puissance, cette méthode ne soit pas techniquement applicable, car le niveau de tension alternative sur la canalisation résultant du couplage inductif ne peut pas être suffisamment réduit pour que la polarisation cathodique nécessaire à maîtriser la corrosion par cette méthode puisse être techniquement applicable par les systèmes de protection cathodique existants sur la canalisation à traiter.

C'est la raison pour laquelle ce premier type de méthode est relativement peu utilisé, ou sinon dans des conditions exceptionnelles et très restrictives.

Un deuxième type de méthode, reposant sur l'application d'une plus faible polarisation cathodique, a été développé à partir de la constatation qu'en présence de tensions alternatives induites d'amplitudes même relativement élevées, une polarisation cathodique relativement faible de l'acier de la canalisation est le plus souvent suffisante pour maîtriser le risque de corrosion. Ceci provient du fait que, dans cette configuration, un film protecteur à base d'oxydes de fer parvient à se stabiliser à la surface de l'acier exposé au milieu sol, au niveau des défauts de revêtement, et ceci malgré la présence de grandes variations du potentiel interfacial de l'acier.

Cependant, il a été constaté que cette configuration favorable pour la maîtrise de la corrosion ne peut se maintenir que si la polarisation cathodique ne s'élève pas au-delà d'un certain seuil, à partir duquel la stabilité du film protecteur n'est plus possible.

Afin de maîtriser le risque de corrosion accéléré par les courants alternatifs induits ou par les courants vagabonds alternatifs, ce deuxième type de méthode a donc pour principe de contrôler le niveau de polarisation cathodique de sorte que celui-ci se situe entre un niveau minimal de polarisation nécessaire en tout état de cause pour protéger l'acier, lorsque la canalisation n'est localement et momentanément pas soumise à la perturbation alternative, et un niveau maximal de polarisation, inférieur ou au plus égal au seuil de polarisation au-delà duquel la stabilité du film protecteur ne peut plus être assurée, compte tenu du niveau de perturbation alternative « maximal » (i.e. pendant les périodes de perturbation les plus défavorables) subi par la canalisation.

Partant de ce principe, il existe différents critères basés notamment sur des mesures de densités de courant et destinés à vérifier que les conditions créées à la surface du coupon correspondent bien à la « fenêtre » de polarisation favorable décrite ci-dessus.

Toutefois, les limites en termes de densités de courant ne sont pas des limites précisément connues, car elles dépendent d'une façon complexe des conditions de sol prévalant le long du tracé de la canalisation (nature du sol, composition chimique de l'électrolyte du sol, humidité relative du sol, relativement à la teneur en eau à saturation), ainsi que de la dimension et de la forme des coupons. La réponse apportée par les opérateurs de canalisation à cette difficulté a consisté jusqu'à présent à définir des frontières délimitant des zones à risque de corrosion, exprimées en terme de « probabilité » de corrosion accélérée par la présence des effets d'induction par les courants alternatifs de puissance, ou par les courants vagabonds alternatifs : trois domaines sont généralement délimités par des frontières d'évaluation du risque de corrosion accélérée par la présence des effets d'induction par les courants alternatifs de puissance, ou par les courants vagabonds alternatifs : domaine à risque faible, modéré ou élevé.

De plus, ces méthodes ne permettent par ailleurs pas une pondération par les différentes valeurs des conditions effectives de perturbation vues par la canalisation tout au cours de la période de temps considérée : elles ne permettent ainsi pas de distinguer deux ouvrages ayant des situations extrêmes similaires, en terme de sévérité de la corrosion accélérée par l'effet de courant alternatif induit ou de courants vagabonds alternatifs, mais chacun pour des durées relatives très différentes, par rapport à la durée totale d'exploitation considérée.

Par ailleurs, des études expérimentales ont montré que les critères existants fondés sur ce deuxième type de méthode ne sont pas suffisamment satisfaisants.

Un troisième type de méthode, illustré notamment par le document EP 1 571 438, consiste simplement à installer et relier à la canalisation, dans les zones du tracé les plus propices à des corrosions accélérées par les effets d'induction par des courants alternatifs de forte puissance, des coupons en forme de sondes à résistance électrique, simulant chacun une zone de défaut de revêtement exposée au milieu sol, devant permettre une évaluation indirecte (par mesure de la vitesse d'évolution dans le temps de la résistance électrique longitudinale des sondes) de la vitesse d'attaque corrosive résultant de la situation particulière de corrosion externe, imputable à la présence des effets d'induction ou de l'effet de courant vagabond alternatif.

Cependant, malgré tout leur intérêt, les méthodes à résistance électrique peuvent se révéler relativement longues à mettre en oeuvre, à proportion de la sensibilité, en termes de seuil de détection des sondes utilisées et à « proportion inverse » de la sévérité « globale » des conditions de perturbation subies par la canalisation. Par ailleurs, ces sondes sont a priori destinées à la mesure de vitesses d'attaques dont la morphologie d'attaque est uniforme. Or les corrosions accélérées associées aux effets d'induction par des courants alternatifs de forte puissance sont le plus souvent des corrosions de morphologie localisée par cratère qui peuvent être très rapides mais s'accompagner d'une faible perte générale de métal. La détermination de la vitesse de corrosion étant par principe fondée sur l'hypothèse d'une attaque uniforme, la précision de mesure est le plus souvent mauvaise, du fait du caractère localisé de l'attaque de corrosion. Par ailleurs, la précision de ces sondes est également directement liée à leur épaisseur. Plus elles sont fines, plus elles sont en théorie précises. Mais, cela limite fortement leur durée de vie et implique leur remplacement régulier et les travaux d'excavation associés.

Il existe donc un besoin pour améliorer la surveillance d'une canalisation enterrée soumises à des influences électriques.

### Objet et résumé de l'invention

L'invention propose un procédé de surveillance d'une canalisation métallique enterrée soumise à une protection cathodique, comprenant les étapes consistant à:
- mesurer un premier courant électrique débité dans une liaison entre la canalisation et un premier coupon enterré à côté de la canalisation,
- mesurer une première tension électrique entre le premier coupon et une première électrode de référence enterrée à côté du premier coupon.

Ce procédé est remarquable en ce qu'il comprend les étapes consistant à:
- déterminer une tension continue moyenne en fonction de la première tension,
- polariser un deuxième coupon à ladite tension continue moyenne, par rapport à une seconde électrode de référence, en utilisant un circuit de polarisation et une électrode auxiliaire, la seconde électrode de référence et l'électrode auxiliaire étant enterrées à côté du deuxième coupon,
- mesurer un deuxième courant circulant dans une branche de raccordement vers l'électrode auxiliaire du circuit de polarisation, et
- mémoriser, pour une pluralité d'instants, une première densité surfacique de courant correspondant au premier courant et une deuxième densité surfacique de courant correspondant au deuxième courant.

Grâce à ces caractéristiques, ce procédé permet de surmonter le verrou technologique que représente la nécessité, pour mettre en oeuvre la technique de maîtrise de la protection, de disposer de deux coupons dans deux situations « synchrones » de protection cathodique identique mais l'un influencé électriquement comme l'est la canalisation dans la zone où il est raccordé à celle-ci et le second non soumis aux influences électriques mais recevant par contre la protection cathodique « à l'identique » du premier et ce sans que le dispositif, qui sera décrit plus loin, utilisé pour mettre en oeuvre le procédé ne perturbe lui-même les conditions locales de polarisation de la canalisation.

Ce procédé tire parti de la meilleure compréhension des mécanismes de corrosion d'une canalisation soumise à des interférences électriques dont des interférences alternatives. En effet, les inventeurs ont constaté que, grâce à l'utilisation d'un deuxième coupon non soumis aux influences alternatives, il est possible de déterminer une différence normalisée entre la densité de courant d'un coupon soumis aux interférences alternatives et la densité de courant d'un coupon dans le même environnement géologique mais soustrait aux influences électriques alternatives, ce qui rend possible d'identifier de manière précise et fiable dans quelle mesure la canalisation se trouve effectivement protégée contre le risque de corrosion ou non.

Ainsi, le procédé de surveillance comprend une étape d'analyse consistant à :
- déterminer une première densité de courant continu moyenne en fonction desdites premières densités surfaciques de courant et une deuxième densité de courant continu moyenne en fonction desdites deuxièmes densités surfaciques de courant,
- déterminer un rapport entre d'une part la différence entre la première et la deuxième densité de courant continu moyenne et d'autre part la deuxième densité de courant continu moyenne,
- évaluer un niveau de risque de corrosion de la canalisation en fonction dudit rapport.

Le niveau de risque de corrosion peut être estimé en comparant ledit rapport avec deux seuils prédéterminés.

De préférence, ladite tension continue moyenne est déterminée par une intégration de ladite première tension électrique sur une durée d'intégration prédéterminée. La durée d'intégration prédéterminée, notée DT, est par exemple de une seconde.

Le procédé de surveillance peut comprendre les étapes consistant à :
- mesurer au moins une grandeur supplémentaire, et
- mémoriser, pour la pluralité d'instants, au moins une valeur correspondant à la grandeur supplémentaire.

Avantageusement, ladite au moins une grandeur supplémentaire peut être l'une des grandeurs suivantes :
- une deuxième tension continue et/ou alternative entre le deuxième coupon et la seconde électrode de référence,
- le pH du milieu à proximité d'une surface exposée du premier coupon,
- la quantité d'hydrogène dans le milieu à proximité de la surface exposée du premier coupon,
- la quantité d'oxygène dans le milieu à proximité de la surface exposée du premier coupon,
- un signal de contact d'un capteur protégé du sol par le premier coupon,
- le pH du milieu à proximité d'une surface exposée du deuxième coupon,
- la quantité d'hydrogène dans le milieu à proximité de la surface exposée du deuxième coupon,
- la quantité d'oxygène dans le milieu à proximité de la surface exposée du deuxième coupon,
- un signal de contact provenant d'un capteur protégé du sol par le deuxième coupon,
- une résistance de dispersion au niveau du premier et/ou du second coupon,
- une vitesse de corrosion sur le premier et/ou sur le second coupon.

L'invention permet dans ce cas de compléter le niveau de risque évalué en fonction des densités de courant grâce à l'évaluation d'au moins un autre critère lié au risque de corrosion et notamment de permettre une mesure du potentiel de protection cathodique de l'ouvrage hors influence électrique alternative.

Corrélativement, l'invention propose un dispositif de surveillance d'une canalisation métallique enterrée soumise à une protection selon la revendication 6.

Le dispositif de surveillance peut comprendre en outre une unité de communication pour transmettre des données mémorisées dans ladite mémoire vers un dispositif d'analyse.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un système de surveillance d'une canalisation enterrée, selon un mode de réalisation de l'invention,
- la figure 2 représente, sous forme de schéma fonctionnel, un dispositif de surveillance du système de la figure 1,
- la figure 3 représente l'architecture matérielle du dispositif de surveillance de la figure 2,
- la figure 4 représente une variante de sonde multifonctionnelle du système de surveillance de la figure 1, la variante dans laquelle n'est pas intégrée une électrode de référence,
- la figure 5 représente les principales étapes d'un procédé d'analyse mis en oeuvre par le dispositif d'analyse du système de la figure 1, et
- la figure 6 est un graphe qui représente des courbes de polarisation l'acier en milieu sol.

### Description détaillée de modes de réalisation

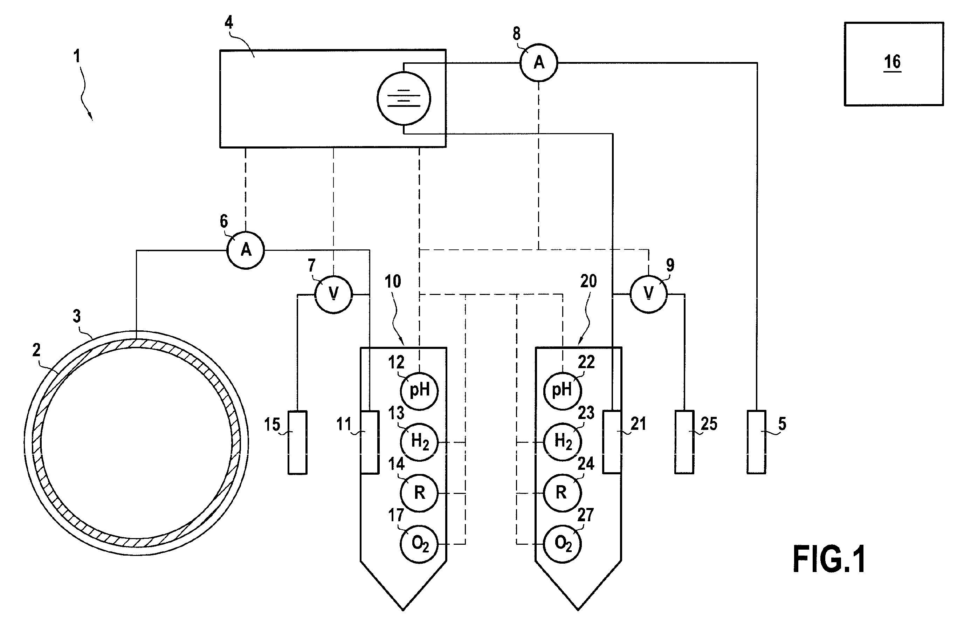

La **figure 1** représente un système de surveillance 1 d'une canalisation enterrée soumise à une protection cathodique. La canalisation comprend un conduit 2 en acier entouré d'un revêtement 3 extérieur. Les éléments permettant d'appliquer la tension de protection cathodique ne sont pas représentés sur la figure 1, par souci de concision.

Le système de surveillance 1 comprend un dispositif de surveillance 4, une sonde 10 multifonctionnelle incluant un coupon 11, un capteur de pH 12, un capteur de quantité d'hydrogène 13, un capteur de quantité d'oxygène 17 et un contacteur 14, une électrode de référence 15, une sonde 20 multifonctionnelle incluant un coupon 21, un capteur de pH 22, un capteur de quantité d'hydrogène 23, un capteur de quantité d'oxygène 27 et un contacteur 24, une électrode de référence 25, et une électrode auxiliaire 5. Le coupon 11 est relié électriquement à la canalisation (plus précisément au conduit 2) alors que le coupon 21 est polarisé, par rapport à l'électrode de référence 25, au moyen de l'électrode auxiliaire 5 et grâce au dispositif de surveillance 4, d'une manière qui sera décrite ultérieurement.

Le système de surveillance 1 comprend également un capteur de courant 6 mesurant le courant dans la liaison entre la canalisation et le coupon 11, un capteur de tension 7 mesurant la tension entre l'électrode de référence 15 et le coupon 11, un capteur de courant 8 mesurant le courant dans le circuit de polarisation du coupon 21 et un capteur de tension 9 mesurant la tension entre l'électrode de référence 25 et le coupon 21.

Le dispositif de surveillance 4 obtient les mesures de tous les capteurs précités, comme représenté par des traits interrompus sur la figure 1. La figure 1 représente tous les capteurs en dehors du dispositif de surveillance 4. Cependant, dans une variante de réalisation, certains capteurs sont intégrés au dispositif de surveillance 4.

Enfin, le système de surveillance 1 comprend aussi un dispositif d'analyse 16. Le dispositif d'analyse 16 est par exemple un ordinateur portable, et peut obtenir les données mesurées et enregistrées par le dispositif de surveillance 4 pour les analyser.

Les coupons 11 et 21 présentent la même forme et la même aire exposée au sol. Ils sont enterrés à proximité de la canalisation, à la même profondeur (généralement au niveau de son axe radial, en fonction des contraintes locales in situ). Ils sont placés de telle sorte que les « cônes d'influences » issus de chacune des deux surfaces d'exposition soient en pratique « totalement disjoints » (par exemple les surfaces exposées des deux coupons « regardent » dans des directions opposées -i.e. à 180 degrés l'une de l'autre, comme représenté sur la figure 1, et par ailleurs les deux coupons sont placés à 5 mètres l'un de l'autre) de façon à éviter autant que possible :
- d'une part que les champs de potentiels résultants des courants (alternatifs ou continus) pénétrant dans chacun des deux coupons ne s'influencent mutuellement, et
- d'autre part une « pollution » mutuelle des milieux sols en regard de chacune des deux surfaces exposées, en particulier une pollution du milieu en regard du coupon non exposé aux tensions alternatives perturbatrices, par le milieu en regard du coupon exposé aux tensions alternatives perturbatrices.

Le coupon 25 est par ailleurs situé au voisinage d'une zone de la canalisation en principe exempte de défaut de revêtement ou a minima en tout état de cause à l'extérieur du cône d'influence de tout défaut de revêtement de la canalisation.

Les électrodes de références 15 et 25 sont par exemple des électrodes Cuivre/Sulfate de Cuivre. L'électrode 15 est placée à proximité du coupon 11 et l'électrode 25 est placée à proximité du coupon 21. Dans une variante non représentée, les électrodes de références 15 et 25 sont incluses dans les sondes 10 et 20, respectivement. Ainsi, lorsqu'on mentionne une électrode de référence enterrée, il faut comprendre qu'elle peut être enterrée dans le sol indépendamment d'une sonde, où incluses dans une sonde elle-même enterrée.

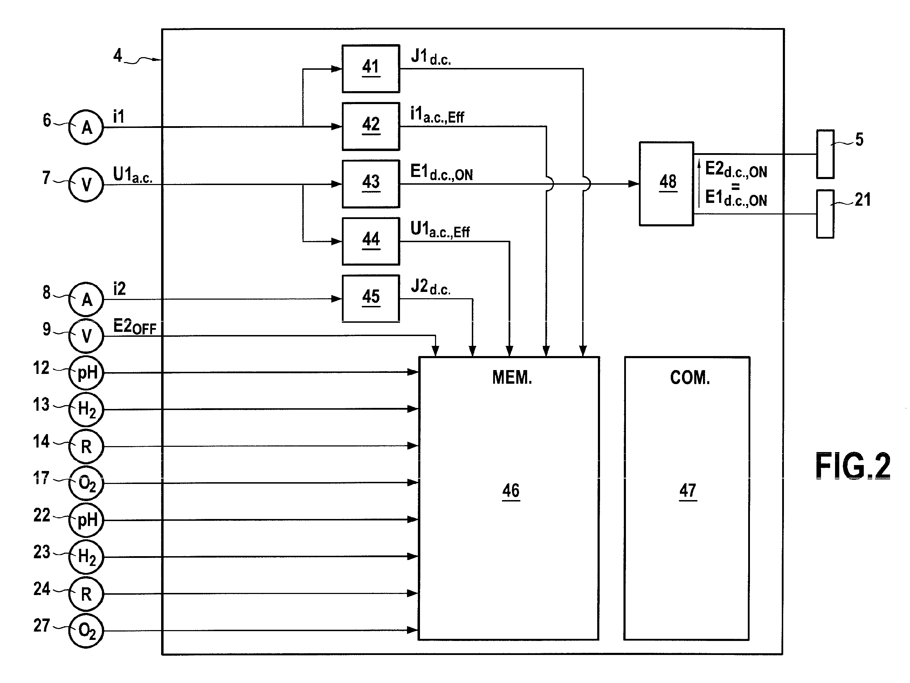

La **figure 2** représente le dispositif de surveillance 4 dans son environnement, sous forme de schéma fonctionnel. Comme expliqué précédemment, le dispositif de surveillance 4 obtient les mesures réalisées par les capteurs précités. En particulier, le dispositif de surveillance 4 obtient :
- Le courant instantané i1 dans la liaison entre la canalisation et le coupon 11, mesuré par le capteur de courant 6.
- La tension alternative instantanée U1_{a.c.} entre l'électrode de référence 15 et le coupon 11, mesurée par le capteur de tension 7.
- Le courant instantané i2 dans le circuit de polarisation du coupon 21, mesuré par le capteur de courant 8.
- La tension E_{OFF} entre l'électrode de référence 25 et le coupon 21, mesurée, dans un délai bref après l'ouverture de la liaison entre le coupon 21 et le circuit de polarisation inclus dans le dispositif de surveillance 4, par le capteur de tension 9.

Le dispositif de surveillance 4 comprend :
- Un module 41 qui détermine, en fonction du courant i1, la valeur moyenne de la densité surfacique de courant entre la canalisation et le coupon 11, notée J1_{d.c.}, par intégration sur une courte durée DT, suffisante pour intégrer un grand nombre de périodes de la perturbation électrique alternative, de par exemple 1 seconde,
- Un module 42 qui détermine la valeur efficace du courant i1, noté i1_{a.c., Eff}.
- Un module 43 qui détermine la valeur moyenne temporelle de la tension U1_{a.c.}, par intégration sur la courte durée DT, notée E1_{d.c., ON}.
- Un module 44 qui détermine la valeur efficace de la tension U1_{a.c.}, notée U1_{a.c., Eff}.
- Un module 45 qui détermine, en fonction du courant i2, la valeur moyenne de la densité surfacique de courant dans le circuit de polarisation du coupon 21, notée J2_{d.c.}, par intégration sur la courte durée DT.

Le dispositif de surveillance 4 comprend également une mémoire 46, une interface de communication 47 et un générateur de tension 48, par exemple un générateur de tension à régulation potentiostatique.

La mémoire 46 mémorise, à échéances régulières t₁, t₂,...tᵢ,...t_{N}, toutes les valeurs fournies par les modules 41 à 45 ainsi que par les capteurs 9, 12 à 14, 17, 22 à 24 et 27. La mémorisation des données peut par exemple être effectuée toutes les dix minutes ou toutes les heures, pendant une période de mesure de un ou plusieurs jours.

L'interface de communication 47 permet de transmettre les données mémorisées dans la mémoire 47, au dispositif d'analyse 16, qui peut alors analyser les données.

Le générateur de tension 48 est configuré pour générer une tension continue, notée E2_{ON}, égale à la tension moyenne E1_{d.c., ON} déterminée par le module 43. Il est relié au coupon 21 et à l'électrode auxiliaire 5. Ainsi, dans le système de surveillance 1, le coupon 21 est polarisé, par rapport à l'électrode de référence 25, à la valeur moyenne de la tension du coupon 11.

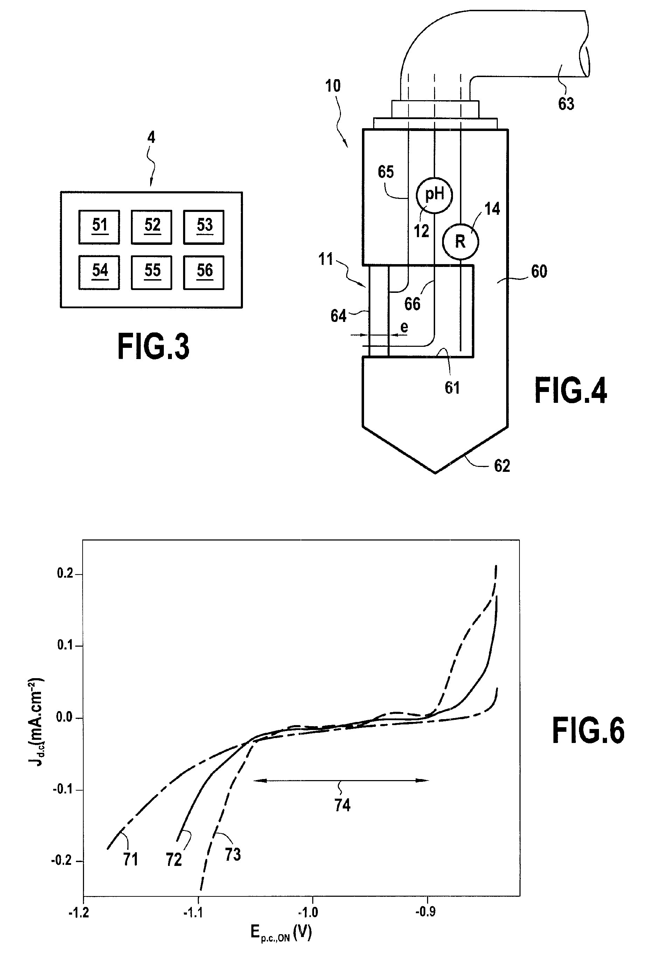

La **figure 3** représente l'architecture matérielle du dispositif de surveillance 4. Le dispositif de surveillance 4 présente l'architecture matérielle d'un ordinateur et comprend notamment un processeur 51, une mémoire volatile 52, une mémoire non-volatile 53, une interface d'entrée 54, une unité de communication 55 et une interface de sortie 56. Le processeur 51 permet d'exécuter des programmes d'ordinateurs mémorisés dans la mémoire non-volatile 53, en utilisant la mémoire volatile 52. L'interface d'entrée 54 permet d'obtenir les mesures réalisées par les capteurs représentés sur la figures 2, par exemple par conversion analogique/numérique. Les modules 41 à 45 de la figure 2 peuvent correspondre à des instructions de programme d'ordinateur mémorisées dans la mémoire non-volatile 53 et exécutées par le processeur 51. La mémoire 46 de la figure 2 peut correspondre à la mémoire non-volatile 53 et/ou la mémoire volatile 52 de la figure 3. L'interface de communication 47 de la figure 2 correspond à l'unité de communication 55 de la figure 3. L'interface de sortie 56 permet la communication avec le dispositif d'analyse 16 et peut comprendre également, notamment, le générateur de tension 48.

Dans le mode de réalisation des figures 2 et 3, le générateur de tension 48 est compris dans le dispositif de surveillance 4. Dans un mode de réalisation alternatif, le dispositif de surveillance 4 envoie une consigne de tension correspondant à E1_{d.c.,ON} vers un générateur de tension externe relié au coupon 21 et à l'électrode auxiliaire 5.

La **figure 4** représente la sonde 10 de manière plus détaillée, en vue en coupe. La sonde 20 présente la même structure et n'est donc pas représentée en détail. Seule la variante de sonde multifonctionnelle qui n'intègre pas d'électrode de référence dans sa constitution est représentée ici.

La sonde 10 comprend un corps 60 cylindrique qui présente une chambre creuse 61 ouverte sur une face latéral du corps 60, une extrémité conique 62 facilitant son insertion dans le sol, et une poignée 63 à l'extrémité opposée.

Le coupon 11 est une pièce d'acier insérée dans la chambre creuse 61 et présente une surface active 64 qui affleure avec la surface latérale du corps 60. Ainsi, lorsque la sonde 10 est enterrée comme sur la figure 1, la surface active 64 est en contact avec le sol. L'épaisseur du coupon 11, notée e, est égale à l'épaisseur ou à une fraction de l'épaisseur du conduit 2 de la canalisation avant mise en place du système. Un conducteur 65, passant par exemple dans la poignée 63, relie électriquement le coupon 11 à l'extérieur, ce qui permet les mesures de tension (capteur 7) et de courant (capteur 6) précitées, via le dispositif de surveillance.

Le capteur de pH 12 est inséré dans la sonde multifonctionnelle à proximité de la surface exposée du coupon 11. Il s'agit par exemple d'un capteur à technologie potentiométrique à oxyde d'iridium ou optique doté d'un capteur chimique fluorescent, permettant le suivi des variations des valeurs du pH inter-facial dans la gamme de mesures de 8 à 13. Le signal fourni par le capteur de pH 12 est transmis au dispositif de surveillance par un conducteur 66 passant par exemple dans la poignée 63.

De manière similaire, le capteur de quantité d'hydrogène 13, non représenté par souci de clarté, est inséré dans la sonde multifonctionnelle à proximité de la surface exposée du coupon 11. Il s'agit par exemple d'un capteur à technologie ampérométrique permettant par oxydation sur sonde de platine la mesure quantitative de l'hydrogène gazeux produit à la surface du coupon 11. Le signal fourni par le capteur de quantité d'hydrogène 13 est transmis au dispositif de surveillance par un conducteur.

Dans une variante, la sonde comprend également un capteur de quantité d'oxygène 17, également non représenté sur la figure 4 par soucis de clarté.

Le contacteur 14 est inséré dans la chambre creuse 61 et permet un mesure de résistivité. En cas de percement du coupon 11 par la corrosion, on mesurera une baisse de la résistivité. Le contacteur 14 peut donc jouer le rôle d'alarme.

La sonde 10 permet, avec un unique dispositif, de réaliser d'une part des mesures électriques en rapport au coupon 11 (capteurs 6 et 7) et d'autre part des mesures physico-chimiques identifiées comme associées au risque de corrosion en présence d'interférences électriques comportant au moins des interférences de courants alternatifs (capteurs 12, 13 et 14).

On décrit maintenant le fonctionnement du système de surveillance 1.

Initialement, les sondes 10 et 20 et les électrodes 5, 15 et 25 sont enfouies dans le sol à côté de la canalisation et sont reliées aux capteurs et au dispositif de surveillance 4, comme représenté sur la figure 1. Cependant, dans une variante où les sondes multifonctionnelles intègrent chacune une électrode de référence, seule l'électrode auxiliaire 5 est enfouie avec les sondes multifonctionnelles à côté de la canalisation.

Ensuite, pendant une période de surveillance, correspondant par exemple à un ou plusieurs jours, le dispositif de surveillance 4 mesure et enregistre les grandeurs précitées, par exemple toutes les dix minutes ou toutes les heures. La période de surveillance est supposée propice pour relever les situations de perturbation alternatives les plus pénalisantes.

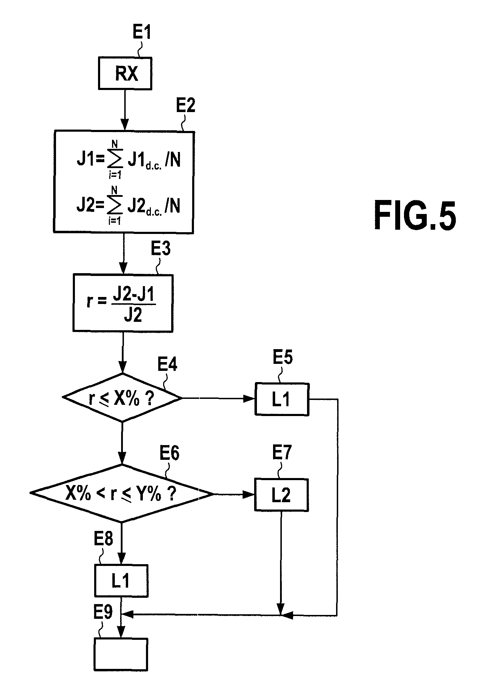

Enfin, les données mémorisées par le dispositif de surveillance 4 sont transmises au dispositif d'analyse 16 via l'interface de communication du dispositif de surveillance. Le dispositif d'analyse 16 analyse les données reçues pour évaluer un risque de corrosion de la canalisation. La **figure 5** représente les principales étapes d'un procédé d'analyse mis en oeuvre par le dispositif d'analyse 16. Ce procédé d'analyse correspond par exemple à l'exécution d'un programme d'ordinateur.

Le procédé d'analyse débute par la réception des données mémorisées par le dispositif de surveillance 4 (étape E1). Par exemple, le dispositif d'analyse 16 est un ordinateur portable amené à proximité du dispositif de surveillance 4 et la transmission des données à lieu, via l'interface de communication du dispositif de surveillance, par une communication sans fil courte distance (Bluetooth, Wi-Fi,...) ou par sur une liaison filaire après avoir relié les deux dispositifs par un câble. En variante, le dispositif d'analyse 16 est situé à distance du dispositif de surveillance 4, par exemple dans un bâtiment d'un opérateur de surveillance, et les données sont transmises par un réseau de télécommunication, par exemple un réseau de téléphonie cellulaire.

Ensuite, à l'étape E2, le dispositif d'analyse 16 calcule la densité de courant moyenne, notée J1, entre la canalisation et le coupon 11, en faisant la moyenne, sur tous les instants tᵢ, des valeurs J1_{d.c.} enregistrées. De même, le dispositif d'analyse 16 calcule la densité de courant moyenne, notée J2, dans le circuit de polarisation du coupon 21, en faisant la moyenne, sur tous les instants tᵢ, des valeurs J2_{d.c.} enregistrées.

Puis, à l'étape E3, le dispositif d'analyse 16 détermine la différence entre J1 et J2, rapportée à J2 : r = (J2 - J1) / J2.

Ensuite, le rapport r est comparé à deux seuils prédéterminés X% et Y% pour évaluer le risque de corrosion de la canalisation. Ces paramètres sont déduits de l'analyse des résultats issus de courbes de polarisations telle que celle illustrée sur la figure 6.

Plus précisément, si r est inférieur ou égal à X%, alors le dispositif d'analyse 16 détermine que le risque de corrosion est faible (étapes E4 et E5). La notation L1 dans l'étape E5 de la figure 5 signifie risque faible ou niveau 1 (« *Level 1* » en anglais).

Si r est supérieur à X% et inférieur ou égal à Y%, alors le dispositif d'analyse 16 détermine que le risque de corrosion est modéré (étapes E6 et E7). La notation L2 dans l'étape E7 de la figure 5 signifie risque modéré ou niveau 2 (« *Level 2 »* en anglais).

Enfin, si r est supérieur à Y%, alors le dispositif d'analyse 16 détermine que le risque de corrosion est élevé (étapes E6 et E8). La notation L3 dans l'étape E8 de la figure 5 signifie risque élevé ou niveau 3 (« *Level 3 »* en anglais).

Comme expliqué ci-dessus, d'autres grandeurs et mesures sont enregistrées par le dispositif de surveillance 4 et reçues par le dispositif d'analyse 16 à l'étape E1 : mesures du pH, de niveau d'hydrogène, etc.... Ces données sont analysées à l'étape E9. Par exemple, le dispositif d'analyse 16 évalue un niveau de risque corrosion de la canalisation en fonction d'un critère basé sur les mesures de pH. Ce niveau de risque, distinct du niveau de risque évalué aux étapes E4 à E8 en fonction des densités de courant J1 et J2, permet de confirmer, de préciser ou d'infirmer le niveau risque évalué aux étapes E4 à E8. Les normes sur la protection contre la corrosion définissent plusieurs critères pouvant être utilisés et on n'en donne donc pas une description détaillée.

Sur la figure 5, l'étape E9 est représentée après les étapes E2 à E8. Bien entendu, en variante, l'étape E9 peut être effectuée avant ou en parallèle aux étapes E2 à E8.

On explique maintenant la justification de la détermination du risque de corrosion par comparaison du rapport r précité avec deux seuils prédéterminés X% et Y%.

A cet effet, la présente invention tire parti des dernières avancées relatives à la compréhension du mécanisme de corrosion en présence d'interférences électriques incluant au moins des interférences de courant alternatif. Il est en effet désormais compris que, lorsque c'est le domaine des faibles polarisations cathodiques qui est recherché pour assurer la protection contre la corrosion en présence des interférences de courant alternatif, des films protecteurs se forment progressivement à l'interface acier/sol lors des excursions anodiques du potentiel inter-facial, et qu'ils ne peuvent se stabiliser à la surface que sous deux conditions étroitement corrélées :
1) l'amplitude des variations « instantanées » du potentiel interfacial et le niveau de polarisation cathodique imposé au coupon sont tels que les excursions cathodiques du potentiel inter-facial, vers les potentiels électronégatifs, ne sont pas suffisantes pour rendre possible une réduction électrochimique des espèces protectrices formées préalablement et empêcher par là-même la construction progressive de ces films ;
2) le potentiel électrochimique interfacial moyen est tel que la réduction cathodique de l'eau n'est pas le phénomène cathodique dominant, ce qui a pour conséquence que le pH interfacial ne peut pas s'élever au-delà d'une valeur limite à partir de laquelle la stabilité thermodynamique des espèces de type rouille verte, espèces à la base de la formation des films protecteurs, serait perdue.

La **figure 6** est un graphe qui représente une courbe de polarisation d'un coupon d'acier en milieu sol (essais en laboratoire). Plus précisément, la courbe 71 représente le lien entre le courant de polarisation J_{d.c}. et le potentiel de polarisation Ep_{C, ON} en l'absence de perturbation alternative (U_{a.c.} = 0 V), alors que les courbes 72 et 73 correspondent à des perturbations alternatives respectivement d'amplitude U_{a.c.} = 3 V et U_{a.c.} = 6 V.

L'expérience a montré que, lorsque l'on soumet l'interface acier/sol à une perturbation de tension alternative sinusoïdale provenant d'effets d'induction de courants alternatifs de puissance, on observe une évolution de la courbe « moyenne » de polarisation de l'acier sous perturbation, comparativement à la courbe de polarisation en l'absence de perturbation de tension alternative, qui se manifeste typiquement par les deux effets suivants, illustrés par la comparaison de la courbe 71 avec les courbes 72 et 73 :
- Premier effet : le potentiel à courant externe moyen nul (par définition le « potentiel de corrosion propre à chacune des conditions de perturbation retenues ») se déplace en principe vers les potentiels plus électronégatifs et ce d'autant plus que l'amplitude de la perturbation de tension alternative s'accroît. Ainsi, sur la figure 6, la courbe 73 coupe l'axe J_{d.c.} = 0 à un potentiel plus électronégatif que la courbe 72, qui elle-même coupe l'axe J_{d.c} = 0 à un potentiel plus électronégatif que la courbe 71.
- Deuxième effet : la cinétique d'oxydation du fer (dans le domaine des potentiels interfaciaux anodiques) s'accroît comparativement à la cinétique en l'absence de perturbation de tension alternative, et ce d'autant plus que l'amplitude de la perturbation de tension s'accroît. Il en est de même pour la cinétique de réduction électrochimique de l'eau (dans le domaine des potentiels interfaciaux cathodiques).

Ces deux effets sont attribués au phénomène dit de « redressement faradique » opéré par l'interface acier/sol sur les signaux alternatifs sinusoïdaux et proviennent essentiellement des différences entre les cinétiques des phénomènes électrochimiques anodiques et celles des phénomènes électrochimiques cathodiques.

Schématiquement, la première conséquence de ces deux effets est que la largeur de la zone dite de « pseudo-pallier » 74 de diffusion de l'oxygène, située dans la partie centrale de la courbe de polarisation, zone dans laquelle le processus de réduction cathodique dominant est la réduction de l'oxygène dissous, se rétrécit progressivement lorsque l'amplitude de la perturbation de tension alternative s'accroît.

La seconde conséquence de ces deux effets est que, selon les conditions de polarisation cathodique et de perturbation alternative, l'interface acier / sol peut évoluer dans le temps et se trouver finalement, schématiquement, dans trois situations distinctes:
1) Situation de type 1 : Si le niveau de polarisation cathodique moyen continu de l'interface se situe, malgré l'amplitude de la perturbation alternative, encore dans la zone du pseudo-pallier de diffusion 74, alors typiquement la construction d'un film protecteur à base de rouilles vertes sera possible et l'acier sera maintenu en situation de protection cathodique efficace. Ce sont typiquement les conditions visées lorsque l'on cherche à assurer la protection de l'acier par une méthode dite « à faible niveau de polarisation cathodique » ;
2) Situation de type 2 : Si le niveau de polarisation cathodique moyen continu de l'interface se situe, du fait de l'effet de décalage du potentiel de corrosion et de l'effet conjoint de « rétrécissement » du pseudo pallier de diffusion de l'oxygène provenant du phénomène de redressement faradique, à une valeur de potentiel électropositive vis-à-vis du potentiel de corrosion, alors la construction d'un film de rouilles vertes ne sera pas possible car dès leur formation celles-ci auront tendance à être oxydées par voie électrochimique en espèces non protectrices. Cette situation provient du niveau relativement élevé de l'amplitude de perturbation alternative, conjointement avec le niveau de polarisation cathodique très faible, caractérisant ce type de situation. L'acier présente alors un risque d'être en situation de protection cathodique inefficace ;
3) Situation de type 3 : Si le niveau de polarisation cathodique moyen continu de l'interface se situe, du fait de l'effet de « rétrécissement » du pseudo pallier de diffusion de l'oxygène provenant du phénomène de redressement faradique, à une valeur de potentiel hors du domaine correspondant à ce pallier et du côté des potentiels plus électronégatifs, alors les effets conjoints de la réduction cathodique de l'eau (devenant significative et contribuant à un accroissement du pH du milieu interfacial dans une zone de pH où les oxydes protecteurs ne sont plus thermodynamiquement stables) et de la réduction électrochimique des oxydes protecteurs, empêchent la formation du film protecteur à base de rouilles vertes. Cette situation provient du niveau relativement élevé de l'amplitude de perturbation alternative, conjointement avec un niveau de polarisation cathodique également trop élevé, caractérisant ce type de situation. L'acier présente alors un risque très élevé d'être en situation de protection cathodique inefficace.

Il convient de noter le caractère dynamique propre à l'établissement de ces trois types de situations : le système acier/sol est en fait potentiellement évolutif sous l'influence de la perturbation alternative et de la polarisation cathodique elles-mêmes, par le jeu des modifications de la composition chimique du milieu à proximité de la surface. Ainsi le troisième type de situation peut s'installer progressivement par suite de l'alcalinisation progressive du milieu à proximité de la surface, résultant des réactions de réduction cathodique, celle-ci ayant pour conséquence une diminution de la résistivité locale du milieu et, conjointement, un accroissement du niveau de l'amplitude de la tension alternative perturbatrice effectivement appliquée à l'interface acier/sol pour un même niveau d'amplitude de la tension alternative perturbatrice existant entre la canalisation et une « terre au loin ». Ainsi un processus qui « s'auto-entretient », voire s'auto-accélère par le jeu de la diminution de résistivité locale du milieu, peut être à l'origine de la situation de type 3.

Le système de surveillance 1 de la présente invention vise, au moyen d'un enregistrement des paramètres mentionnés précédemment, sur une période de temps suffisante et suffisamment représentative, à identifier le type de situation vers laquelle l'interface entre l'acier et le coupon 11 a évolué sous l'influence des conditions de polarisation cathodique et de perturbation de tension alternative subies par le coupon 11.

L'utilisation du coupon 21, en position comparative au coupon 11 au plan de la polarisation cathodique et des conditions de sol, mais soustrait à l'action de la perturbation de tension alternative permet en effet :
*d'une part d'apprécier, notamment par la mesure d'un potentiel « OFF » dans une situation ou le coupon est dépourvu de toute perturbation de tension alternative, le niveau de polarisation cathodique sur la canalisation,
* d'autre part de disposer d'un outil de jugement comparatif en situation : les inventeurs ont constaté que les trois types de situations décrites ci-dessus peuvent en effet être identifiés par la comparaison des densités de courants moyennes mesurées sur les deux coupons au cours de la période de mise en oeuvre de la méthode. Ainsi, un rapport r inférieur ou égal à X% correspond à une situation de type 1 ci-dessus, présentant un risque faible pour la canalisation vis-à-vis du risque de corrosion par les courants alternatifs induits. Lorsque le rapport r est compris entre X% et Y%, cela correspond à une situation de type 2 ci-dessus, qui est considérée comme présentant un risque modéré pour la canalisation vis-à-vis du risque de corrosion par les courants alternatifs induits. Enfin, lorsque le rapport r est supérieur à Y%, cela correspond à une situation de type 3 qui est considérée comme présentant un risque élevé pour la canalisation vis-à-vis du risque de corrosion par les courants alternatifs induits. Les seuils X% et Y% sont des valeurs qui sont déterminées empiriquement par l'homme du métier.

La présente invention permet donc de déterminer de manière précise le risque de corrosion de la canalisation soumise à une protection cathodique « faible ». Par rapport aux méthodes du deuxième type citées en introduction, la présente invention utilise des seuils permettant de distinguer entre trois niveaux de risque de manière précise, les seuils ayant été validés expérimentalement.

De plus, grâce à l'utilisation de sondes multifonctionnelles incluant d'une part un coupon et d'autre part des capteurs physico-chimique, l'invention permet de confirmer le niveau de risque basé sur la différence de densité de courant avec des critères physicochimiques fiables.

Dans une variante de l'invention, les mesures sont réalisées en deux temps. Dans un premier temps, le coupon 11 n'est pas raccordé directement à la canalisation et est soumis, au même titre que le coupon 21, à une polarisation à un potentiel E_{ON} égal au potentiel moyen temporel E1_{ON, d.c.} mesuré entre la canalisation et l'électrode de référence 15 associée au coupon 11. Les valeurs moyennes continues des courants instantanés, notées i1_{d.c.}(tᵢ) et i2_{d.c}.(tᵢ) débités dans les circuits de polarisation respectivement du coupon 11 et du coupon 21 sont enregistrées régulièrement et à la fin de cette période le rapport entre les valeurs moyennes de ces deux grandeurs soit m = Σ i2i2_{d.c.}(tᵢ)/Σi1_{d.c.}(tᵢ) est calculé. Ensuite, dans un second temps, les coupons 11 et 21 sont raccordés et polarisés comme représenté sur la figure 1 et les mesures et enregistrements analogues y sont réalisés. Par contre les critères adoptés pour juger de l'efficacité des systèmes de protection cathodique vis-à-vis de la maîtrise de la corrosion imputable aux effets des courants alternatifs utilisent le rapport m comme un correctif permettant de tenir compte de la différence intrinsèque (en terme d'aire exposée, d'efficience du contact avec le sol de l'aire exposée au milieu sol) entre les densités de courant débitées dans les deux coupons, observée entre les deux coupons durant le premier temps de la mise en oeuvre de la méthode.

Dans une variante de l'invention, un second circuit de polarisation du second coupon (21) utilise un générateur de courant à régulation galvanostatique, lequel peut, dans une séquence particulière de la procédure de surveillance et contrôle, polariser le second coupon (21) au moyen d'un courant de polarisation constant égal à la valeur moyenne temporelle (intégrée sur une durée suffisante pour intégrer un grand nombre de périodes de la perturbation électrique alternative, par exemple sur la durée DT) du courant instantané débité dans la liaison du premier coupon à la canalisation, soit I1_{d.c.}. Le dispositif de surveillance mesure et mémorise la valeur de la tension E_{2,d.c.,ON} (ou bien E_{2,d.c.,OFF} après ouverture du circuit de polarisation) prise par le second coupon, par rapport à l'électrode de référence qui lui est attachée, lors de cette séquence de polarisation par voie galvanostatique. Cette valeur de potentiel E_{2,d.c.,ON} (ou bien E_{2,d.c.,OFF}) est utilisée pour confirmer, préciser ou infirmer le niveau risque évalué aux étapes E4 à E8.

## Revendications

1. Procédé de surveillance d'une canalisation (2) métallique enterrée soumise à une protection cathodique, comprenant les étapes consistant à:
- mesurer un premier courant électrique (i1) débité dans une liaison entre la canalisation et un premier coupon (11) enterré à côté de la canalisation,
- mesurer une première tension électrique (U1_{a.c.}) entre le premier coupon (11) et une première électrode de référence (15) enterrée à côté du premier coupon (11),
**caractérisé en ce qu'il** comprend les étapes consistant à:
- déterminer une tension continue moyenne (E1_{d.c., ON}) en fonction de la première tension (U1_{a.c.}),
- polariser un deuxième coupon (21) à ladite tension continue moyenne (E1_{d.c., ON}), par rapport à une seconde électrode de référence (25), en utilisant un circuit de polarisation et une électrode auxiliaire (5), la seconde électrode de référence et l'électrode auxiliaire étant enterrées à côté du deuxième coupon (21),
- mesurer un deuxième courant (i2) circulant dans une branche de raccordement vers l'électrode auxiliaire (5) du circuit de polarisation, et
- mémoriser, pour une pluralité d'instants, une première densité surfacique de courant (J1_{d.c.}) correspondant au premier courant (i1) et une deuxième densité surfacique de courant (J2_{d.c.}) correspondant au deuxième courant (i2)et **en ce qu'**il comprend en outre une étape d'analyse consistant à :
- déterminer (E2) une première densité de courant moyenne (J1) en fonction desdites premières densités surfaciques de courant (J1_{d.c.}) et une deuxième densité de courant moyenne (J2) en fonction desdites deuxième densités surfaciques de courant (J2_{d.c.}),
- déterminer (E3) un rapport (r) entre d'une part la différence entre la première (J1) et la deuxième (J2) densité de courant moyenne et d'autre part la deuxième densité de courant moyenne (J2),
- évaluer (E4 - E8) un niveau de risque de corrosion de la canalisation en fonction dudit rapport (r).

2. Procédé de surveillance selon la revendication 1, dans lequel ledit niveau de risque de corrosion est estimé en comparant ledit rapport (r) avec deux seuils prédéterminés (X%, Y%).

3. Procédé de surveillance selon l'une des revendications 1 et 2, dans lequel ladite tension continue moyenne (E1_{d.c., ON}) est déterminée par une intégration de ladite première tension électrique (U1_{a.c.}) sur une durée d'intégration prédéterminée.

4. Procédé de surveillance selon l'une des revendications 1 à 3, comprenant les étapes consistant à :
- mesurer au moins une grandeur supplémentaire, et
- mémoriser, pour la pluralité d'instants, au moins une valeur correspondant à la grandeur supplémentaire.

5. Procédé de surveillance selon la revendication 4, dans lequel ladite au moins une grandeur supplémentaire est l'une des grandeurs suivantes :
- une deuxième tension (E2_{OFF}) continue et/ou alternative entre le deuxième coupon (21) la seconde électrode (25),
- le pH du milieu à proximité d'une surface exposée du premier coupon (11),
- la quantité d'hydrogène dans le milieu à proximité de la surface exposée du premier coupon (11),
- la quantité d'oxygène dans le milieu à proximité de la surface exposée du premier coupon (11),
- un signal de contact d'un capteur (14) protégé du sol par le premier coupon (11),
- le pH du milieu à proximité d'une surface exposée du deuxième coupon (21),
- la quantité d'hydrogène dans le milieu à proximité de la surface exposée du deuxième coupon (21),
- la quantité d'oxygène dans le milieu à proximité de la surface exposée du deuxième coupon (21),
- un signal de contact provenant d'un capteur (24) protégé du sol par le deuxième coupon (21),
- une résistance de dispersion au niveau du premier et/ou du second coupon,
- une vitesse de corrosion sur le premier et/ou sur le second coupon.

6. Dispositif de surveillance (4) d'une canalisation (2) métallique enterrée soumise à une protection cathodique, **caractérisé en ce qu'il** comprend:
- un premier coupon (11) et un deuxième coupon (21),
- une première électrode de référence (15) et une seconde électrode de référence (25),
- une électrode auxiliaire (5),
- une interface d'entrée (54) arrangée pour obtenir la mesure d'un premier courant électrique (i1) débité dans une liaison entre la canalisation et le premier coupon (11) enterré à côté de la canalisation (2), et la mesure d'une première tension électrique (U1_{a.c.}) entre le premier coupon (11) et la première électrode de référence (15) enterrée à côté du premier coupon (11),
- un module (51, 52, 53 ; 43) configuré de façon à déterminer une tension continue moyenne (E1_{d.c., ON}) en fonction de la première tension (U1_{a.c.}), et
- un circuit de polarisation (56 ; 48) arrangé pour polariser le deuxième coupon (21) à ladite tension continue moyenne (E1_{d.c., ON}), par rapport à la seconde électrode de référence (25), en utilisant l'électrode auxiliaire (5), lorsque la seconde électrode de référence (25) et l'électrode auxiliaire (5) sont enterrées à côté du deuxième coupon (21), l'interface d'entrée (54) étant aussi arrangée pour obtenir la mesure d'un deuxième courant (i2) circulant dans une branche de raccordement vers l'électrode auxiliaire (5) du circuit de polarisation,
le dispositif de surveillance (4) comprenant en outre une mémoire (52, 53 ; 46) arrangée pour mémoriser, pour une pluralité d'instants, une première densité surfacique de courant (J1_{d.c.}) correspondant au premier courant (i1) et une deuxième densité surfacique de courant (J2_{d.c.}) correspondant au deuxième courant (i2), et un dispositif d'analyse (16) configuré pour mettre en oeuvre les étapes consistant à:
- déterminer une première densité de courant moyenne (J1) en fonction desdites premières densités surfaciques de courant (J1_{d.c.}) et une deuxième densité de courant moyenne (J2) en fonction desdites deuxième densités surfaciques de courant (J2_{d.c.}),
- déterminer un rapport (r) entre d'une part la différence entre la première (J1) et la deuxième (J2) densité de courant moyenne et d'autre part la deuxième densité de courant moyenne (J2), et
- évaluer un niveau de risque de corrosion de la canalisation en fonction dudit rapport (r).

7. Dispositif de surveillance selon la revendication 6, comprenant en outre une unité de communication (56 ; 47) pour transmettre des données mémorisées dans ladite mémoire vers le dispositif d'analyse (16).

## Patentansprüche

1. Verfahren zur Überwachung einer einem kathodischen Schutz unterzogenen erdverlegten Metallrohrleitung (2), das die Schritte umfasst, die darin bestehen:
- einen ersten elektrischen Strom (i1), der in einer Verbindung zwischen der Rohrleitung und einem neben der Rohrleitung erdverlegten ersten Abschnitt (11) abgegeben wird, zu messen,
- eine erste elektrische Spannung (U1_{a.c.}) zwischen dem ersten Abschnitt (11) und einer neben dem ersten Abschnitt (11) erdverlegten ersten Bezugselektrode (15) zu messen,
**dadurch gekennzeichnet, dass** es die Schritte umfasst, die darin bestehen:
- eine mittlere Gleichspannung (E1_{d.c., ON}) in Abhängigkeit von der ersten Spannung (U1_{a.c.}) zu bestimmen,
- einen zweiten Abschnitt (21), in Bezug auf eine zweite Bezugselektrode (25), unter Verwendung eines Polarisationskreises und einer Hilfselektrode (5), mit der mittleren Gleichspannung (E1_{d.c.}, _{ON}) zu polarisieren, wobei die zweite Bezugselektrode und die Hilfselektrode neben dem zweiten Abschnitt (21) erdverlegt sind,
- einen zweiten Strom (i2), der in einem Verbindungszweig zu der Hilfselektrode (5) des Polarisationskreises fließt, zu messen, und
- für eine Vielzahl von Zeitpunkten eine erste Flächenstromdichte (J1_{d.c.}). die dem ersten Strom (i1) entspricht, sowie eine zweite Flächenstromdichte (J2_{d.c.}), die dem zweiten Strom (i2) entspricht, zu speichern, und dass es ferner einen Analyseschritt umfasst, der darin besteht:
- eine erste mittlere Stromdichte (J1) in Abhängigkeit von den ersten Flächenstromdichten (J1_{d.c.}) sowie eine zweite mittlere Stromdichte (J2) in Abhängigkeit von den zweiten Flächenstromdichten (J2_{d.c.}) zu bestimmen (E2),
- ein Verhältnis (r) zwischen einerseits der Differenz zwischen der ersten (J1) und der zweiten (J2) mittleren Stromdichte und andererseits der zweiten mittleren Stromdichte (J2) zu bestimmen (E3),
- eine Korrosionsrisikostufe der Rohrleitung in Abhängigkeit von dem Verhältnis (r) zu bemessen (E4 - E8).

2. Überwachungsverfahren nach Anspruch 1, wobei die Korrosionsrisikostufe durch Vergleichen des Verhältnisses (r) mit zwei vorbestimmten Schwellen (X%, Y%) abgeschätzt wird.

3. Überwachungsverfahren nach einem der Ansprüche 1 und 2, wobei die mittlere Gleichspannung (E1_{d.c.}, _{ON}) durch eine Integration der ersten elektrischen Spannung (U1_{a.c.}) über eine vorbestimmte Integrationsdauer bestimmt wird.

4. Überwachungsverfahren nach einem der Ansprüche 1 bis 3, umfassend die Schritte, die darin bestehen:
- wenigstens eine zusätzliche Größe zu messen und
- für die Vielzahl von Zeitpunkten wenigstens einen der zusätzlichen Größe entsprechenden Wert zu speichern.

5. Überwachungsverfahren nach Anspruch 4, wobei die wenigstens eine zusätzliche Größe eine der folgenden Größen ist:
- eine zweite Gleich- und/oder Wechselspannung (E2_{OFF}) zwischen dem zweiten Abschnitt (21) und der zweiten Elektrode (25),
- der pH-Wert des Milieus in der Nähe einer exponierten Fläche des ersten Abschnitts (11),
- die Wasserstoffmenge in dem Milieu in der Nähe der exponierten Fläche des ersten Abschnitts (11),
- die Sauerstoffmenge in dem Milieu in der Nähe der exponierten Fläche des ersten Abschnitts (11),
- ein Kontaktsignal eines Sensors (14), der durch den ersten Abschnitt (11) vor dem Boden geschützt ist,
- der pH-Wert des Milieus in der Nähe einer exponierten Fläche des zweiten Abschnitts (21),
- die Wasserstoffmenge in dem Milieu in der Nähe der exponierten Fläche des zweiten Abschnitts (21),
- die Sauerstoffmenge in dem Milieu in der Nähe der exponierten Fläche des zweiten Abschnitts (21),
- ein Kontaktsignal von einem Sensor (24), der durch den zweiten Abschnitt (21) vor dem Boden geschützt ist,
- einen Ausbreitungswiderstand im Bereich des ersten und/oder des zweiten Abschnitts,
- eine Korrosionsgeschwindigkeit an dem ersten und/oder an dem zweiten Abschnitt.

6. Vorrichtung zur Überwachung (4) einer einem kathodischen Schutz unterzogenen erdverlegten Metallrohrleitung (2), **dadurch gekennzeichnet, dass** sie umfasst:
- einen ersten Abschnitt (11) und einen zweiten Abschnitt (21),
- ein erste Bezugselektrode (15) und eine zweite Bezugselektrode (25),
- eine Hilfselektrode (5),
- eine Eingangsschnittstelle (54), die dazu eingerichtet ist, die Messung eines ersten elektrischen Stroms (i1), der in einer Verbindung zwischen der Rohrleitung und dem neben der Rohrleitung (2) erdverlegten ersten Abschnitt (11) abgegeben wird, sowie die Messung einer ersten elektrischen Spannung (U1_{a.c.}) zwischen dem ersten Abschnitt (11) und der neben dem ersten Abschnitt (11) erdverlegten ersten Bezugselektrode (15) zu erhalten,
- ein Modul (51, 52, 53; 43), das so ausgelegt ist, dass es eine mittlere Gleichspannung (E1_{d.c., ON}) in Abhängigkeit von der ersten Spannung (U1_{a.c.}) bestimmt, und
- einen Polarisationskreis (56; 48), der dazu eingerichtet ist, den zweiten Abschnitt (21), in Bezug auf die zweite Bezugselektrode (25), unter Verwendung der Hilfselektrode (5), mit der mittleren Gleichspannung (E1_{d.c.}, _{ON}) zu polarisieren, wenn die zweite Bezugselektrode (25) und die Hilfselektrode (5) neben dem zweiten Abschnitt (21) erdverlegt sind,
wobei die Eingangsschnittstelle (54) auch dazu eingerichtet ist, die Messung eines zweiten Stroms (i2), der in einem Verbindungszweig zu der Hilfselektrode (5) des Polarisationskreises fließt, zu erhalten,
wobei die Überwachungsvorrichtung (4) ferner einen Speicher (52, 53; 46), der dazu eingerichtet ist, für eine Vielzahl von Zeitpunkten eine erste Flächenstromdichte (J1_{d.c.}), die dem ersten Strom (i1) entspricht, sowie eine zweite Flächenstromdichte (J2_{d.c.}), die dem zweiten Strom (i2) entspricht, zu speichern, sowie eine Analysevorrichtung (16) umfasst, die dazu ausgelegt ist, die Schritte durchzuführen, die darin bestehen:
- eine erste mittlere Stromdichte (J1) in Abhängigkeit von den ersten Flächenstromdichten (J1_{d.c.}) sowie eine zweite mittlere Stromdichte (J2) in Abhängigkeit von den zweiten Flächenstromdichten (J2_{d.c.}) zu bestimmen,
- ein Verhältnis (r) zwischen einerseits der Differenz zwischen der ersten (J1) und der zweiten (J2) mittleren Stromdichte und andererseits der zweiten mittleren Stromdichte (J2) zu bestimmen, und
- eine Korrosionsrisikostufe der Rohrleitung in Abhängigkeit von dem Verhältnis (r) zu bemessen.

7. Überwachungsvorrichtung nach Anspruch 6, ferner umfassend eine Kommunikationseinheit (56; 47), um in dem Speicher gespeicherte Daten zu der Analysevorrichtung (16) zu übertragen.

## Claims

1. A method for monitoring a buried metal drain (2) under cathodic protection, comprising the steps consisting in :
- measuring a first electrical current (i1) charged in a connection between the drain and a first coupon (11) which is buried next to the drain,
- measuring a first electrical voltage (U1_{a.c.}) between the first coupon (11) and a first reference electrode (15) which is buried next to the first coupon (11),
**characterized in that** it comprises the steps consisting in:
- determining an average direct current voltage (E1_{d.c.}, _{ON}) as a function of the first voltage (U1_{a.c.}),
- polarizing a second coupon (21) with said average direct current voltage (E1_{d.c.}, _{ON}), with respect to a second reference electrode (25), using a polarization circuit and an auxiliary electrode (5), the second reference electrode and the auxiliary electrode being buried next to the second coupon (21),
- measuring a second current (i2) circulating in a branch of the connection toward the auxiliary electrode (5) of the polarization circuit, and
- storing for multiple times a first surface current density (J1_{d.c.}) corresponding to the first current (i1) and a second surface current density (J2_{d.c.}) corresponding to the second current (i2) and **in that** it further comprises an analyzing step consisting in:
- determining (E2) a first average current density (J1) as a function of said first surface current densities (J1_{d.c.}) and a second average current density (J2) as a function of said second surface current densities (J2_{d.c.}),
- determining (E3) a ratio (r) between on the one hand the difference between the first (J1) and the second (J2) average current density and on the other hand the second average current density (J2),
- estimating (E4-E8) a level of corrosion risk for the drain as a function of said ratio (r).

2. The monitoring method of claim 1, wherein said level of corrosion risk is estimated by comparing said ratio (r) with two predetermined thresholds (X%, Y%).

3. The monitoring method according to one of claims 1 and 2, wherein said average direct current voltage (E1_{d.c.}, _{ON}) is determined by integrating said first voltage (U1_{a.c.}) within a predetermined integration duration.

4. The monitoring method according to one of claims 1 to 3, comprising the steps consisting in:
- measuring at least one additional parameter, and
- storing for multiple times at least a value corresponding to said additional parameter.

5. The monitoring method according to claim 4, wherein said at least one additional parameter is one of the following parameters:
- a second average direct current and/or alternating current voltage (E2_{OFF}) between the second coupon (21) and the second electrode (25),
- the pH of the medium next to an exposed surface of said first coupon (11),
- the hydrogen quantity in the medium next to the exposed surface of said first coupon (11),
- the oxygen quantity in the medium next to the exposed surface of said first coupon (11),
- a contacting signal of a sensor (14) which is protected from ground by the first coupon (11),
- the pH of the medium next to an exposed surface of the second coupon (21),
- the hydrogen quantity in the medium next to the exposed surface of the second coupon (21),
- the oxygen quantity in the medium next to the exposed surface of the second coupon (21),
- a contacting signal of a sensor (24) which is protected from ground by the second coupon (21),
- a dispersion resistor at the level of the first and/or the second coupon,
- a corrosion speed on the first and/or the second coupon.

6. A device (4) for monitoring a buried metal drain (2) subjected to cathodic protection, **characterized in that** it comprises:
- a first coupon (11) and a second coupon (21),
- a first reference electrode (15) and a second reference electrode (25),
- an auxiliary electrode (5),
- an input interface (54) arranged for obtaining the measure of a first electrical current (i1) charged in a connection between the drain and the first coupon (11) which is buried next to the drain (2), and the measure of a first electrical voltage (U1_{a.c.}) between the first coupon (11) and the first reference electrode (15) which is buried next to the first coupon (11),
- a module (51, 52, 53; 43) which is configured to determine an average direct current voltage (E1_{d.c.}, _{ON}) as a function of the first voltage (U1_{a.c.}), and
- a polarization circuit (56; 48) arranged to polarize the second coupon (21) with said average direct current voltage (E1_{d.c.}, _{ON}), with respect to the second reference electrode (25), using the auxiliary electrode (5), when the second reference electrode (25) and the auxiliary electrode (5) are buried next to the second coupon (21), the input interface (54) being also arranged to obtain the measure of a second current (i2)) circulating in a branch of the connection toward the auxiliary electrode (5) of the polarization circuit,
- the monitoring device (4) further comprising a memory (52, 53; 46) arranged for storing for multiple times a first surface current density (J1_{d.c.}) corresponding to the first current (i1) and a second surface current density (J2_{d.c.}) corresponding to the second current (i2) and an analyzing device (16) arranged for implementing the steps consisting in:
- determining a first average current density (J1) as a function of said first surface current densities (J1_{d.c.}) and a second average current density (J2) as a function of said second surface current densities (J2_{d.c.}),
- determining a ratio (r) between on the one hand the difference between the first (J1) and the second (J2) average current density and on the other hand the second average current density (J2), and
- estimating a level of corrosion risk for the drain as a function of said ratio (r).

7. The monitoring device of claim 6, further comprising a communication unit (56; 47) for transmitting data stored in said memory to the analyzing device (16).
